# EUROPEAN PATENT APPLICATION

(11) **EP 4 804 544 A1**
(43) Date of publication of application: **09.09.2026**
(21) Application number: 24946191.4
(22) Date of filing: 05.12.2024
(51) Int. Cl.: H04N 23/45

(54) **IMAGE STITCHING METHOD AND APPARATUS, AND PANORAMIC CAMERA**

(30) Priority: 01.07.2024 CN 202410871869
(71) Applicant: Labpano Technology (Changzhou) Co., Ltd., Changzhou, Jiangsu 213166 (CN)
(72) Inventor: SHEN, Jingcheng, hangzhou, Jiangsu 213166 (CN); WU, Dawei, hangzhou, Jiangsu 213166 (CN); WANG, Shibo, hangzhou, Jiangsu 213166 (CN)
(74) Representative: Osterhoff, Utz
(86) International application number: PCT/CN2024/137147
(87) International publication number: WO 2026/007325

(57) **Abstract**

The present application is applied to the technical field of image processing, and provides an image stitching method, applied to a panoramic camera. The panoramic camera is provided with a first fisheye lens and a second fisheye lens. The image stitching method includes: acquiring a first fisheye image based on the first fisheye lens, and acquiring a second fisheye image based on the second fisheye lens (S101); mapping the first fisheye image onto a unit spherical surface to obtain a first spherical image, and mapping the second fisheye image onto the unit spherical surface to obtain a second spherical image (S102); rotating the first spherical image by a specified angle to obtain a rotated first spherical image, and rotating the second spherical image by the specified angle to obtain a rotated second spherical image (S103); unfolding the rotated first spherical image into a first ERP image, and unfolding the rotated second spherical image into a second ERP image (S104); stitching the first ERP image and the second ERP image to obtain a target image (S105). In this way, the image stitching accuracy can be effectively improved.

## Description

### TECHNICAL FIELD

The present application relates to the technical field image processing, and in particular relates to an image stitching method, an image stitching apparatus and a panoramic camera.

### BACKGROUND

In recent years, with the continuous development of science and technology, various apparatus have emerged in people's lives, such as panoramic cameras. A panoramic camera generally uses at least two lenses to shoot simultaneously, and then stitches the obtained images. However, the current image stitching accuracy is not high.

### SUMMARY

The present application provide an image stitching method, an image stitching apparatus and a panoramic camera, which can solve the problem of low image stitching accuracy in current applications.

In a first aspect, an embodiment of the present application provides an image stitching method, which is applied to a panoramic camera, and the panoramic camera is provided with a first fisheye lens and a second fisheye lens. The image stitching method includes: acquiring a first fisheye image based on the first fisheye lens, and acquiring a second fisheye image based on the second fisheye lens; mapping the first fisheye image onto a unit spherical surface to obtain a first spherical image and mapping the second fisheye image onto the unit spherical surface to obtain a second spherical image, where the first spherical image is a spherical image corresponding to the first fisheye image, and the second spherical image is a spherical image corresponding to the second fisheye image; rotating the first spherical image by a specified angle to obtain a rotated first spherical image, and rotating the second spherical image by the specified angle to obtain a rotated second spherical image; unfolding the rotated first spherical image into a first Equirectangular Projection (ERP) image, and unfolding the rotated second spherical image into a second ERP image, where the first ERP image is an image obtained by unfolding the rotated first spherical image in an ERP manner, and the second ERP image is an image obtained by unfolding the rotated second spherical image in the ERP manner; and stitching the first ERP image and the second ERP image to obtain a target image.

In one possible implementation of the first aspect, the first fisheye lens and the second fisheye lens are symmetrical with respect to a first plane, and the first fisheye lens and the second fisheye lens are respectively located on two sides of the first plane; before the rotating the first spherical image by the specified angle to obtain the rotated first spherical image and rotating the second spherical image by the specified angle to obtain the rotated second spherical image, the method further includes: establishing a spherical coordinate system, where the spherical coordinate system is a three-dimensional rectangular coordinate system, an origin of the spherical coordinate system is an intersection point of an optical center connecting line and the first plane; the optical center connecting line is a connecting line between an optical center of the first fisheye lens and an optical center of the second fisheye lens; a first axis of the spherical coordinate system is perpendicular to the first plane; a second axis of the spherical coordinate system is on the first plane and perpendicular to the first axis; a direction of the second axis is vertically upward; a third axis of the spherical coordinate system is perpendicular to a second plane; and the second plane is a plane where the first axis and the second axis are located; the rotating the first spherical image by the specified angle to obtain the rotated first spherical image and rotating the second spherical image by the specified angle to obtain the rotated second spherical image includes: rotating the first spherical image around the third axis by 90 degrees in a specified direction to obtain a rotated first spherical image, and rotating the second spherical image around the third axis by 90 degrees in the specified direction to obtain a rotated second spherical image.

In one possible implementation of the first aspect, the rotating the first spherical image around the third axis by 90 degrees in the specified direction to obtain the rotated first spherical image and rotating the second spherical image around the third axis by 90 degrees to obtain the rotated second spherical image in the specified direction includes: rotating the first spherical image around the third axis counterclockwise by 90 degrees to obtain a rotated first spherical image, and rotating the second spherical image around the third axis counterclockwise by 90 degrees to obtain a rotated second spherical image.

In one possible implementation of the first aspect, the stitching the first ERP image and the second ERP image to obtain the target image includes: determining a target region in the first ERP image and a target region in the second ERP image, where the target region in the first ERP image is a region in the first ERP image having a plurality of identical feature points with the second ERP image, and the target region in the second ERP image is a region in the second ERP image having a plurality of identical feature points with the first ERP image; determining a relative displacement between identical feature points based on the target region in the first ERP image and the target region in the second ERP image; and stitching the first ERP image and the second ERP image based on the relative displacement to obtain a target image.

In one possible implementation of the first aspect, the stitching the first ERP image and the second ERP image based on the relative displacement to obtain the target image includes: performing orthogonal decomposition on the relative displacement in a two-dimensional latitude and longitude coordinate system to obtain a component of the relative displacement in a meridian extension direction; registering the target region in the first ERP image and the target region in the second ERP image based on the component of the relative displacement in the meridian extension direction to obtain a registration result; and stitching the first ERP image and the second ERP image according to the registration result to obtain the target image.

In one possible implementation of the first aspect, the target image is a two-dimensional planar image; after stitching the first ERP image and the second ERP image to obtain the target image, the method includes: converting the target image into a third spherical image; rotating the third spherical image around the third axis by 90 degrees in a reverse direction to obtain a rotated third spherical image, where the reverse direction is opposite to the specified direction; and unfolding the rotated third spherical image into a third ERP image, where the third ERP image is an image obtained by unfolding the rotated third spherical image in the ERP manner.

In a second aspect, an embodiment of the present application provides an image stitching apparatus, which is applied to a panoramic camera, and the panoramic camera is provided with a first fisheye lens and a second fisheye lens. The image stitching apparatus includes: a first acquisition unit configured to acquire a first fisheye image based on the first fisheye lens, and acquire a second fisheye image based on the second fisheye lens; a second acquisition unit configured to map the first fisheye image onto a unit spherical surface to obtain a first spherical image and map the second fisheye image onto the unit spherical surface to obtain a second spherical image, where the first spherical image is a spherical image corresponding to the first fisheye image, and the second spherical image is a spherical image corresponding to the second fisheye image; a third acquisition unit configured to rotate the first spherical image by a specified angle to obtain a rotated first spherical image, and rotate the second spherical image by the specified angle to obtain a rotated second spherical image; an unfolding unit configured to unfold the rotated first spherical image into a first ERP image, and unfold the rotated second spherical image into a second ERP image, where the first ERP image is an image obtained by unfolding the rotated first spherical image in an ERP manner, and the second ERP image is an image obtained by unfolding the rotated second spherical image in the ERP manner; and a stitching unit configured to stitch the first ERP image and the second ERP image to obtain a target image.

In a third aspect, an embodiment of the present application provides a panoramic camera, including a first fisheye lens, a second fisheye lens, a memory, a processor, and a computer program stored in the memory and executable on the processor, and when the computer program is executed by the processor, the method described above is implemented.

In a fourth aspect, an embodiment of the present application provides a computer-readable storage medium, the computer-readable storage medium stores a computer program, and when the computer program is executed by a processor, the method described above is implemented.

It can be understood that the beneficial effects of the above second aspect may refer to the relevant descriptions in the above first aspect, which will not be repeated herein.

The beneficial effects of the embodiments of the present application compared with the related art are as follows. The image stitching method in the embodiments of the present application is applied to a panoramic camera. Since the first spherical image can be rotated by a specified angle to obtain a rotated first spherical image, and the second spherical image can be rotated by the specified angle to obtain a rotated second spherical image; the rotated first spherical image can be unfolded into a first ERP image, and the rotated second spherical image can be unfolded into a second ERP image, and then the first ERP image and the second ERP image can be stitched together to obtain the target image, higher stitching accuracy can be achieved. The specific reasons are as follows: compared with the related art (which is to unfold the spherical image directly using the ERP method without rotating the spherical image, and then complete the stitching|), the embodiments of the present application can acquire more image pixels for completing the stitching, thereby achieving higher stitching accuracy.

### BRIEF DESCRIPTION OF THE DRAWINGS

In order to illustrate the technical solutions in the embodiments of the present application more clearly, the following briefly introduces the accompanying drawings required for the description of the embodiments or the related art. Obviously, the drawings in the following description are only part of embodiments of the present application. For those skilled in the art, other drawings can also be obtained according to the structures shown in these drawings without any creative effort.

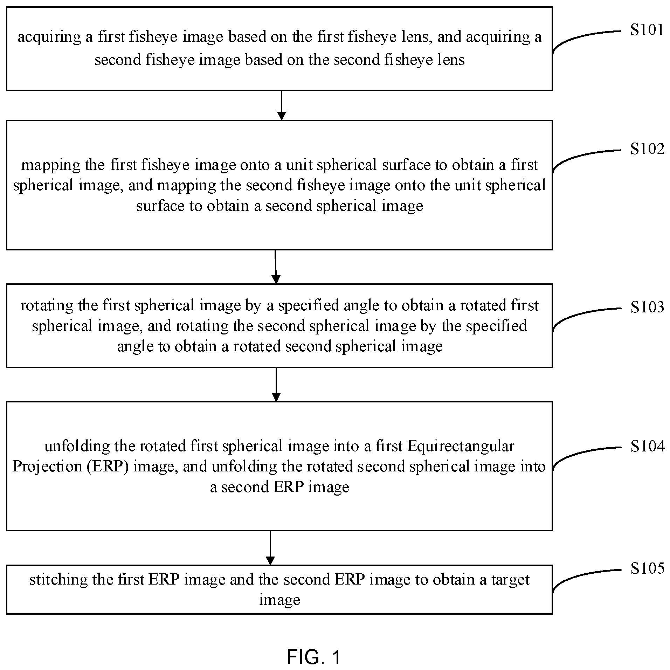

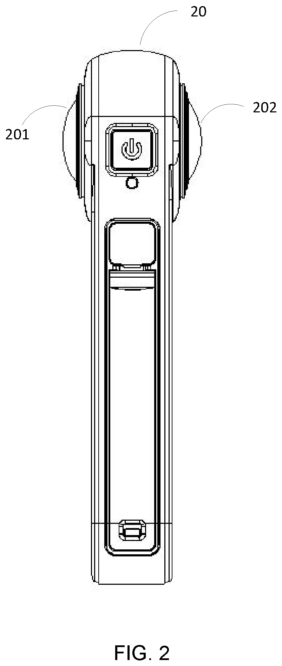

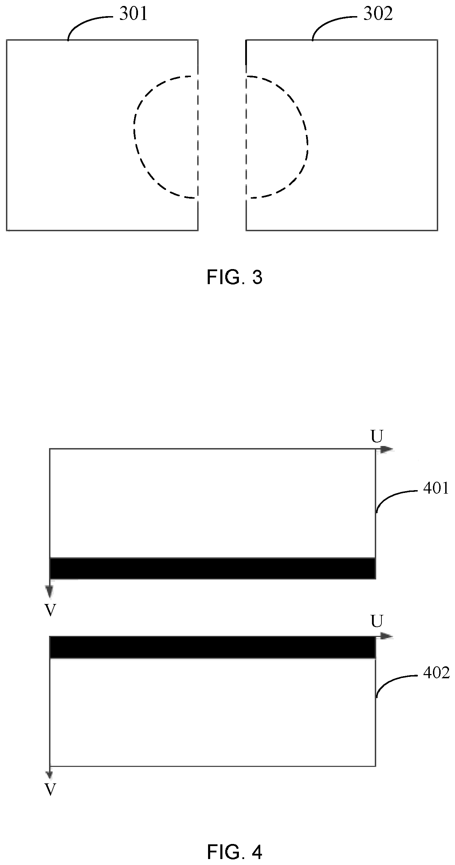

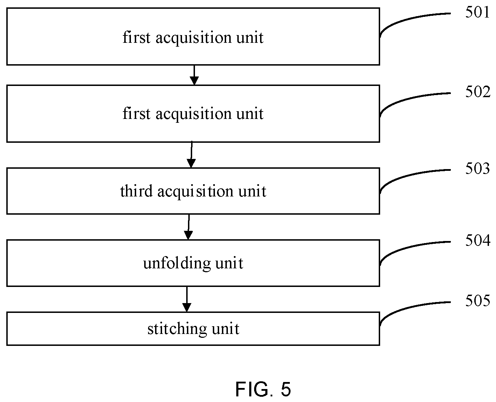

FIG. 1 is a flow chart of an image stitching method according to an embodiment of the present application; FIG. 2 is a schematic diagram of a panoramic camera according to an embodiment of the present application; FIG. 3 is a schematic diagram of an image obtained based on the related art; FIG. 4 is a schematic diagram of an image according to an embodiment of the present application, including a schematic diagram of a first ERP image and a second ERP image; FIG. 5 is a schematic diagram of an image stitching apparatus according to an embodiment of the present application.

### DETAILED DESCRIPTION OF THE EMBODIMENTS

In the following description, for the purpose of explanation rather than limitation, specific details such as a specific system structure and technology are set forth to provide a thorough understanding of the embodiments of the present application. However, it should be clear to those skilled in the art that the present application can be implemented in other embodiments without these specific details. In other cases, detailed descriptions of well-known systems, apparatuses, circuits and methods are omitted so as not to obscure the description of the present application with unnecessary details.

It should be understood that the term "comprising" used in the specification and the appended claims of the present application indicates the presence of the described features, integers, steps, operations, elements and/or components, but does not exclude the presence or addition of one or more other features, integers, steps, operations, elements, components and/or combinations thereof.

It should also be understood that the term "and/or" used in the specification and the appended claims of the present application refers to any combination and all possible combinations of one or more of the associated listed items, and includes such combinations.

As used in the specification and the appended claims of the present application, the term "if" may be interpreted as "when" or "once" or "in response to determination" or "in response to detection" depending on the context. Similarly, the phrase "if determined" or "if detected [described condition or event]" may be interpreted as meaning "once determined" or "in response to determination" or "once detected [described condition or event]" or "in response to detection [described condition or event]" depending on the context.

In addition, in the description of the specification and the appended claims of the present application, the terms "first", "second", "third", etc are only used for distinguishing descriptions and shall not be construed as indicating or implying relative importance.

Reference to "an embodiment" or "some embodiments" as described in in the specification means that one or more embodiments of this application include a specific feature, structure, or characteristic described in connection with that embodiment. Thus, the phrases "in an embodiment", "in some embodiments", "in other embodiments", "in other embodiments" etc., appearing in various parts in the specification do not necessarily refer to the same embodiment, but rather mean "one or more, but not all embodiments" unless otherwise specifically emphasized. The terms "comprising", "including", "having" and variations thereof mean "including but not limited to" unless otherwise specifically emphasized.

### Embodiment 1

FIG. 1 shows a flow chart of an image stitching method according to an embodiment of the present application, and the image stitching method can be applied to a panoramic camera. The image stitching method is applied to a panoramic camera, and the panoramic camera is provided with a first fisheye lens and a second fisheye lens. For example, the panoramic camera 20 can be as shown in FIG. 2, and the first fisheye lens 201 and the second fisheye lens 202 are symmetrically provided at two sides of the panoramic camera. The image stitching method includes: Step S101, Step S102, Step S103, Step S104 and Step S105. Details are as follows.

Step S101, acquiring a first fisheye image based on the first fisheye lens, and acquiring a second fisheye image based on the second fisheye lens.

The first fisheye image and the second fisheye image are captured simultaneously, and both the first fisheye image and the second fisheye image are two-dimensional images. The field angle corresponding to the first fisheye image and the field angle corresponding to the second fisheye image are both greater than 180 degrees. Some regions in the first fisheye image are the same as some regions in the second fisheye image, that is, some regions in the first fisheye image and some regions in the second fisheye image have the same feature points. Some regions in the first fisheye image is located at an edge position in the first fisheye image, and some regions in the second fisheye image is located at an edge position in the second fisheye image. The pixel distortion of some regions in the first fisheye image and some regions in the second fisheye image is extremely serious.

Step S102, mapping the first fisheye image onto a unit spherical surface to obtain a first spherical image, where the first spherical image is a spherical image corresponding to the first fisheye image, and mapping the second fisheye image onto the unit spherical surface to obtain a second spherical image, where the second spherical image is a spherical image corresponding to the second fisheye image.

The unit spherical surface is a spherical surface of a unit sphere.

By way of example and not limitation, Step S102 includes: mapping coordinates of each pixel of the first fisheye image in an image coordinate system (two-dimensional coordinate system) onto the unit spherical surface by using internal parameters and external parameters obtained by calibrating the first fisheye lens, so as to obtain spherical coordinates of the first fisheye image, that is, the first spherical image can be obtained, where the spherical coordinates are coordinates in a spherical coordinate system; mapping coordinates of each pixel of the second fisheye image in the image coordinate system onto the unit spherical surface by using internal parameters and external parameters obtained by calibrating the second fisheye lens, so as to obtain spherical coordinates of the second fisheye image, that is, the second spherical image can be obtained.

Step S103, rotating the first spherical image by a specified angle to obtain a rotated first spherical image, and rotating the second spherical image by the specified angle to obtain a rotated second spherical image.

In an embodiment, the first fisheye lens and the second fisheye lens are symmetrical with respect to a first plane, and the first fisheye lens and the second fisheye lens are respectively located on two sides of the first plane. Before Step S103, the method includes: establishing a spherical coordinate system, where the spherical coordinate system is a three-dimensional rectangular coordinate system; an origin of the spherical coordinate system is an intersection point of an optical center connecting line and the first plane; the optical center connecting line is a connecting line between an optical center of the first fisheye lens and an optical center of the second fisheye lens; a first axis of the spherical coordinate system is perpendicular to the first plane; a second axis of the spherical coordinate system is on the first plane and perpendicular to the first axis; a direction of the second axis is vertically upward; a third axis of the spherical coordinate system is perpendicular to a second plane; the second plane is a plane where the first axis and the second axis are located; correspondingly, Step S103 includes: rotating the first spherical image around the third axis by 90 degrees in a specified direction to obtain a rotated first spherical image, and rotating the second spherical image around the third axis by 90 degrees in the specified direction to obtain a rotated second spherical image.

Specifically, the first plane is a symmetry plane of the panoramic camera, and neither the first fisheye lens nor the second fisheye lens passes through the first plane.

By way of example and not limitation, the rotating the first spherical image around the third axis by 90 degrees in the specified direction to obtain the rotated first spherical image and rotating the second spherical image around the third axis by 90 degrees in the specified direction obtain the rotated second spherical image includes: rotating the first spherical image around the third axis by 90 degrees in a specified direction to obtain a rotated first spherical image based on a specified relational expression and a rotation matrix, where the specified relational expression is *P^{'C}* = *RP^{C}*, where *P'^{C}* is used for representing the rotated spherical image, *P^{C}* is used for representing an unrotated spherical image, and *R* is used for representing the rotation matrix $R = {\left.\left[\begin{matrix}1 & 0 & 0 \\ 0 & cosα & - sinα \\ 0 & sinα & cosα\end{matrix}\right]\right|}_{α = {α}_{0}}$; rotating the second spherical image around the third axis by 90 degrees in the specified direction to obtain a rotated second spherical image based on the specified relational expression and the rotation matrix. Where, α₀ can be 90 degrees or -90 degrees; the similarity between α₀ being 90 degrees and α₀ being -90 degrees is that both represent rotation by 90 degrees; the difference between α being 90 degrees and α being -90 degrees is that the two represent different rotation directions.

In this embodiment, the first spherical image is rotated around the third axis by 90 degrees in the specified direction to obtain the rotated first spherical image, and the second spherical image is rotated around the third axis by 90 degrees in the specified direction to obtain the rotated second spherical image. Subsequently, the rotated first spherical image and the rotated second spherical image are unfolded in an equirectangular projection manner. Since edges of the unfolded images are relatively flat, the number of pixels abandoned for stitching can be effectively reduced in a subsequent stitching process, that is, more pixels for completing stitching are obtained in this embodiment, thereby achieving higher stitching accuracy.

In some embodiments, the rotating the first spherical image around the third axis by 90 degrees in the specified direction to obtain the rotated first spherical image and rotating the second spherical image around the third axis by 90 degrees in the specified direction to obtain the rotated second spherical image includes: rotating the first spherical image around the third axis clockwise by 90 degrees to obtain a rotated first spherical image, and rotating the second spherical image around the third axis clockwise by 90 degrees to obtain a rotated second spherical image.

In some embodiments, the rotating the first spherical image around the third axis by 90 degrees in the specified direction to obtain the rotated first spherical image and rotating the second spherical image around the third axis by 90 degrees in the specified direction to obtain the rotated second spherical image includes: rotating the first spherical image around the third axis counterclockwise by 90 degrees to obtain a rotated first spherical image, and rotating the second spherical image around the third axis counterclockwise by 90 degrees to obtain a rotated second spherical image.

Step S104, unfolding the rotated first spherical image into a first Equirectangular Projection (ERP) image, and unfolding the rotated second spherical image into a second ERP image, where the first ERP image is an image obtained by unfolding the rotated first spherical image in an ERP manner, and the second ERP image is an image obtained by unfolding the rotated second spherical image in the ERP manner.

By way of example and not limitation, the first ERP image and the second ERP image can be displayed in a two-dimensional latitude and longitude coordinate system, a top-left vertex of the first ERP image/a top-left vertex of the second ERP image is an origin of the two-dimensional latitude and longitude coordinate system, and the two-dimensional latitude and longitude coordinate system can be represented as a uv coordinate system. An abscissa u can be linearly mapped as longitude, and a value range of longitude is [-180°, 180°]; an ordinate v can be linearly mapped as latitude, and a value range of latitude is [-90°, 90°].

In the related art, if a spherical image is not rotated and is directly unfolded in an ERP manner, an unfolding result is as shown in FIG. 3, resulting in images 301 and 302. A region enclosed by the dashed line is an invalid region caused by blind spots. Theoretically, pixels available for stitching are distributed on left and right sides of the image 301 and left and right sides of the image 302. However, in practice, one side in the image 301 and one side in the image 302 are used for stitching in the related art, and the other side in the image 301 and the other side in the image 302 are not used for stitching, that is, the number of pixels actually used for stitching is small, and stitching efficiency and stitching accuracy are low.

In the present application, the first spherical image can be rotated around the third axis by 90 degrees in the specified direction to obtain the rotated first spherical image, and the second spherical image can be rotated around the third axis by 90 degrees in the specified direction to obtain the rotated second spherical image, so as to obtain the first ERP image and the second ERP image. The first ERP image 401 and the second ERP image 402 are as shown in FIG. 4, a region available for stitching in the first ERP image 401 is a black region of the first ERP image 401 and is located at a lower end of the first ERP image 401; a region available for stitching in the second ERP image 402 is a black region in the second ERP image 402 and is located at an upper end of the second ERP image 402. Since the pixels available for stitching in the first ERP image 401 are all concentrated on one side of the first ERP image 401, and the pixels available for stitching in the second ERP image 402 are also concentrated on one side of the second ERP image 402, the number of pixels for image stitching can be greatly increased, thereby improving stitching accuracy and stitching efficiency.

Step S105, stitching the first ERP image and the second ERP image to obtain a target image.

Specifically, both the first ERP image and the second ERP image are rectangular regions, and the rectangular regions has a length and a width. The target image is obtained by stitching together the length of the first ERP image and the length of the second ERP image.

Optionally, due to manufacturing process limitations of the two fisheye lenses, parallax can exist between the two fisheye lenses.

In order to reduce a negative impact of the parallax on image stitching, Step S105 includes: Step a1, Step a2 and Step a3, where:
Step a1, determining a target region in the first ERP image and a target region in the second ERP image, where the target region in the first ERP image is a region in the first ERP image having a plurality of identical feature points with the second ERP image, and the target region in the second ERP image is a region in the second ERP image having a plurality of identical feature points with the first ERP image;
Step a2, determining a relative displacement between identical feature points based on the target region in the first ERP image and the target region in the second ERP image; and
Step a3, stitching the first ERP image and the second ERP image based on the relative displacement to obtain a target image.

In the two-dimensional latitude and longitude coordinate system, a longitude range traversed by the target region in the first ERP image along the latitude extension direction is equal to a longitude range spanned by the first ERP image along the latitude extension direction; a longitude range traversed by the target region in the second ERP image along the latitude extension direction is equal to a longitude range spanned by the second ERP image along the latitude extension direction.

To illustrate step a2, for example, the target region in the first ERP image has a feature point b1 and a feature point b2, the target region in the second ERP image has a feature point c1 and a feature point c2, where the feature point b1 and the feature point c1 are the same feature points, and the feature point b2 and the feature point c2 are the same feature points. The relative displacement between the feature point b1 and the feature point c1 is determined, and the relative displacement between the feature point b2 and the feature point c2 is determined. Correspondingly, Step a3 includes: stitching the first ERP image and the second ERP image based on the relative displacement between the feature point b1 and the feature point c1 and the relative displacement between the feature point b2 and the feature point c2 to obtain a target image.

In some embodiments, Step a3 includes: performing orthogonal decomposition on the relative displacement in a two-dimensional latitude and longitude coordinate system to obtain a component of the relative displacement in a meridian extension direction; registering the target region in the first ERP image and the target region in the second ERP image based on the component of the relative displacement in the meridian extension direction to obtain a registration result; and stitching the first ERP image and the second ERP image according to the registration result to obtain a target image.

For example, the two-dimensional latitude and longitude coordinate system is represented as a uv coordinate system, the meridian extension direction is a direction of a v axis, and correspondingly, orthogonal decomposition is performed on the relative displacement in the two-dimensional latitude and longitude coordinate system to obtain a component of the relative displacement in the direction of the v axis; the target region in the first ERP image and the target region in the second ERP image are registered based on the component of the relative displacement in the direction of the v axis to obtain the registration result; and the first ERP image and the second ERP image are stitched according to the registration result to obtain the target image.

In an embodiment, the target image is a two-dimensional planar image. After Step S105, the method includes: converting the target image into a third spherical image; rotating the third spherical image around the third axis by 90 degrees in a reverse direction to obtain a rotated third spherical image, where the reverse direction is opposite to the specified direction; and unfolding the rotated third spherical image into a third ERP image, where the third ERP image is an image obtained by unfolding the rotated third spherical image in the ERP manner.

The third spherical image is a spherical image corresponding to the target image. For example, if the specified direction is a clockwise direction, the reverse direction is a counterclockwise direction; if the specified direction is a counterclockwise direction, the reverse direction is a clockwise direction.

In some embodiments, after the unfolding the rotated third spherical image into the third ERP image, the method includes: performing target detection based on the third ERP image to obtain a target detection result. In this way, a more accurate target detection result can be obtained.

The image stitching method in the embodiment of the present application is applied to a panoramic camera. Since the first spherical image can be rotated by a specified angle to obtain a rotated first spherical image, and the second spherical image can be rotated by the specified angle to obtain a rotated second spherical image; the rotated first spherical image is unfolded into a first ERP image, the rotated second spherical image is unfolded into a second ERP image, and then the first ERP image and the second ERP image are stitched to obtain a target image, higher stitching accuracy can be achieved. The specific reasons are as follows: compared with the related art (which is to unfold the spherical image directly using the ERP method without rotating the spherical image, and then complete the stitching), the embodiment of the present application can obtain a larger number of pixels for completing stitching, thereby achieving higher stitching accuracy.

It should be understood that the sequence numbers of the steps in the above embodiments do not mean the execution sequence. The execution order of each process should be determined by its function and internal logic, and should not constitute any limitation on the implementation process of the embodiments of the present application.

### Embodiment 2

Corresponding to the image stitching method described in the above embodiment, FIG. 5 shows a schematic diagram of an image stitching apparatus according to an embodiment of the present application, and for convenience of description, only parts related to the embodiment of the present application are shown.

The image stitching apparatus is applied to a panoramic camera, the panoramic camera is provided with a first fisheye lens and a second fisheye lens, and the image stitching apparatus includes: a first acquisition unit 501, a second acquisition unit 502, a third acquisition unit 503, an unfolding unit 504 and a stitching unit 505.

The first acquisition unit 501 is configured to acquire a first fisheye image based on the first fisheye lens, and acquire a second fisheye image based on the second fisheye lens.

The second acquisition unit 502 is configured to map the first fisheye image onto a unit spherical surface to obtain a first spherical image, where the first spherical image is a spherical image corresponding to the first fisheye image, and map the second fisheye image onto the unit spherical surface to obtain a second spherical image, where the second spherical image is a spherical image corresponding to the second fisheye image.

The third acquisition unit 503 is configured to rotate the first spherical image by a specified angle to obtain a rotated first spherical image, and rotate the second spherical image by the specified angle to obtain a rotated second spherical image.

The unfolding unit 504 is configured to unfold the rotated first spherical image into a first ERP image, and unfold the rotated second spherical image into a second ERP image, where the first ERP image is an image obtained by unfolding the rotated first spherical image in an ERP manner, and the second ERP image is an image obtained by unfolding the rotated second spherical image in the ERP manner.

The stitching unit 505 is configured to stitch the first ERP image and the second ERP image to obtain a target image.

In an embodiment, the first fisheye lens and the second fisheye lens are symmetrical with respect to a first plane, and the first fisheye lens and the second fisheye lens are respectively located on two sides of the first plane. The image stitching apparatus includes a coordinate system establishment unit.

The coordinate system establishment unit is configured to: before the third acquisition unit performs the rotating the first spherical image by a specified angle to obtain the rotated first spherical image and rotating the second spherical image by the specified angle to obtain the rotated second spherical image, establish a spherical coordinate system, where the spherical coordinate system is a three-dimensional rectangular coordinate system, an origin of the spherical coordinate system is an intersection point of an optical center connecting line and the first plane; the optical center connecting line is a connecting line between an optical center of the first fisheye lens and an optical center of the second fisheye lens, a first axis of the spherical coordinate system is perpendicular to the first plane, a second axis of the spherical coordinate system being on the first plane and perpendicular to the first axis, a direction of the second axis is vertically upward, a third axis of the spherical coordinate system is perpendicular to a second plane, and the second plane is a plane where the first axis and the second axis are located; correspondingly, when performing the rotating the first spherical image by the specified angle to obtain the rotated first spherical image and rotating the second spherical image by the specified angle to obtain the rotated second spherical image, the third acquisition unit is configured to: rotate the first spherical image around the third axis by 90 degrees in the specified direction to obtain the rotated first spherical image, and rotate the second spherical image around the third axis by 90 degrees in the specified direction to obtain the rotated second spherical image.

In an embodiment, the target image is a two-dimensional planar image, and the image stitching apparatus further includes an image processing unit.

The image processing unit is configured to: after the stitching unit 505 performs the stitching the first ERP image and the second ERP image to obtain a target image, convert the target image into a third spherical image; rotate the third spherical image around the third axis by 90 degrees in a reverse direction to obtain a rotated third spherical image, where the reverse direction is opposite to the specified direction; and unfold the rotated third spherical image into a third ERP image, where the third ERP image is an image obtained by unfolding the rotated third spherical image in the ERP manner.

In some embodiments, the image stitching apparatus further includes a target detection unit.

The target detection unit is configured to: after the image processing unit performs the unfolding the rotated third spherical image into a third ERP image, perform target detection based on the third ERP image to obtain a target detection result. In this way, a more accurate target detection result can be obtained.

The present application further provides another preferred embodiment of an image stitching apparatus. In this embodiment, the image stitching apparatus includes a processor configured to execute the following program modules stored in a memory: a first acquisition unit 501 configured to acquire a first fisheye image based on the first fisheye lens and acquire a second fisheye image based on the second fisheye lens; a second acquisition unit 502 configured to map the first fisheye image onto a unit sphere to obtain a first spherical image ,where the first spherical image is the spherical image corresponding to the first fisheye image, and map the second fisheye image onto the unit sphere to obtain a second spherical image where the second spherical image is the spherical image corresponding to the second fisheye image); a third acquisition unit 503 configured to rotate the first spherical image by a specified angle to obtain a rotated first spherical image, and rotate the second spherical image by the specified angle to obtain a rotated second spherical image; an unfolding unit 504 configured to unfold the rotated first spherical image into a first ERP image and unfold the rotated second spherical image into a second ERP image, where the first ERP image is the image obtained by unfolding the rotated first spherical image using an ERP method, and the second ERP image is the image obtained by unfolding the rotated second spherical image using the ERP method; a stitching unit 505 configured to stitch the first ERP image and the second ERP image to obtain a target image.

In some embodiments, the processor is further configured to execute the following program modules stored in the memory: a coordinate system establishment unit.

In some embodiments, the target image is a two-dimensional planar image, and the processor is further configured to execute the following program modules stored in the memory: an image processing unit.

In some embodiments, the processor is further configured to execute the following program modules stored in the memory: a target detection unit.

It should be noted that for technical details not described in detail in this embodiment, reference may be made to the image stitching method according to each of the above Embodiment 1.

### Embodiment 3

The panoramic camera in this embodiment includes: a first fisheye lens, a second fisheye lens, at least one processor, a memory, and a computer program stored in the memory and executable on the at least one processor, and when the computer program is executed by a processor, the image stitching method described above is implemented.

When the computer program is executed by a processor, the image stitching method described above is implemented, for example, steps S101 to S105 shown in FIG. 1. Alternatively, when the computer program is executed by a processor, the functions of each unit in the above device embodiments is implemented, for example, the functions of the units 501 to 505 shown in FIG. 5.

It can be understood by those skilled in the art that FIG. 3 is only an example of the panoramic camera and does not constitute a limitation on the panoramic camera, and may include more or fewer components than those shown in the figure, or combine some components, or different components, for example, may further include an input/output device, a network access device, etc.

The processor may be a Central Processing Unit (CPU), and the processor may also be other general-purpose processors, Digital Signal Processors (DSPs), Application Specific Integrated Circuits (ASICs), Field-Programmable Gate Arrays (FPGAs) or other programmable logic devices, discrete gate or transistor logic devices, discrete hardware components, etc. A general-purpose processor may be a microprocessor or the processor may also be any conventional processor or the like.

The memory may be an internal storage unit of the panoramic camera in some embodiments, such as a hard disk or a memory of the panoramic camera. The memory may also be an external storage device of the panoramic camera in other embodiments, such as a plug-in hard disk, a Smart Media Card (SMC), a Secure Digital (SD) card, a flash card, etc. which are equipped on the panoramic camera. Further, the memory may also include both an internal storage unit and an external storage device of the panoramic camera. The memory is used for storing an operating system, an application program, a BootLoader, data and other programs, such as program codes of the computer program, etc. The memory may also be used for temporarily storing data that has been output or is to be output.

It should be noted that information interaction and execution processes among the above apparatuses/units are based on the same concept as the method embodiments of the present application, and specific functions and brought technical effects thereof can be seen in the method embodiment parts, which are not repeated here.

It can be clearly understood by those skilled in the art that for convenience and brevity of description, only the division of the above functional units and modules is exemplified, and in practical applications, the above functions can be allocated to be completed by different functional units and modules as required, that is, the internal structure of the apparatus is divided into different functional units or modules to complete all or part of the above described functions. The functional units and modules in the embodiments may be integrated into one processing unit, or each unit may exist alone physically, or two or more units are integrated into one unit. The integrated unit may be implemented in a form of hardware, or may be implemented in a form of a software functional unit. In addition, specific names of the functional units and modules are only for distinguishing from one another and are not used for limiting the protection scope of the present application. For specific working processes of the units and modules in the above system, reference may be made to corresponding processes in the above method embodiments, which are not repeated herein.

Embodiments of the present application further provide a computer-readable storage medium. The computer-readable storage medium stores a computer program, and when the computer program is executed by a processor, each of the above method embodiments is implemented.

Embodiments of the present application provide a computer program product. When the computer program product runs on a panoramic camera, the panoramic camera is caused to execute and implement the steps in each of the above method embodiments.

The integrated unit, if implemented in the form of a software functional unit and sold or used as an independent product, may be stored in a computer-readable storage medium. Based on such understanding, all or part of the processes in the methods of the above embodiments of the present application may be implemented by a computer program instructing related hardware, the computer program may be stored in a computer-readable storage medium, and when the computer program is executed by a processor, the steps in the above method embodiments may be implemented. The computer program includes computer program code, and the computer program code may be in a source code form, an object code form, an executable file form, some intermediate forms, etc. The computer-readable medium at least may include: any entity or apparatus capable of carrying the computer program code to the panoramic camera, a recording medium, a computer memory, a Read-Only Memory (ROM), a Random Access Memory (RAM), an electrical carrier signal, a telecommunication signal and a software distribution medium. For example, a U disk, a mobile hard disk, a magnetic disk or an optical disk, etc. In some jurisdictions, computer-readable media may not be electrical carrier signals and telecommunication signals according to legislation and patent practice.

In the above embodiments, the description of each embodiment has its own emphasis, and for parts that are not described or recorded in detail in a certain embodiment, reference may be made to relevant descriptions of other embodiments.

Those skilled in the art may realize that the units and algorithm steps of each example described in connection with the embodiments disclosed herein may be implemented by electronic hardware, or a combination of computer software and electronic hardware. Whether these functions are performed by hardware or software depends on the specific application and design constraints of the technical solution. Skilled artisans may implement the described functionality using different methods for each particular application, but such implementation should not be considered as beyond the scope of the present application.

In the embodiments provided in the present application, it should be understood that the disclosed apparatus/network device and method may be implemented in other manners. For example, the apparatus/network device embodiments described above are only illustrative. For example, the division of the modules or units is only a logical function division, and there may be other division manners in actual implementation, for example, a plurality of units or components may be combined or integrated into another system, or some features may be omitted or not executed. In addition, the shown or discussed mutual coupling or direct coupling or communication connection may be through some interfaces, indirect coupling or communication connection of apparatuses or units, and may be in an electrical, mechanical or other form.

The units described as separate parts may or may not be physically separate, and parts shown as units may or may not be physical units, may be located in one place, or may be distributed on a plurality of network units. Some or all of the units may be selected according to actual needs to achieve the objectives of the solutions of the embodiments.

The above embodiments are only used to illustrate the technical solutions of the present application, but not to limit the same; although the present application is described in detail with reference to the above embodiments, those skill in the art should understand that: the technical solutions described in the above embodiments may still be modified, or some technical features thereof may be equivalently replaced; and such modifications or replacements do not make the essence of the corresponding technical solutions depart from the spirit and scope of the technical solutions of the embodiments of the present application, and shall be included within the protection scope of the present application.

The present application is applied to panoramic cameras and can effectively improve the accuracy of image stitching.

## Claims

1. An image stitching method, **characterized in that** the image stitching method is applied to a panoramic camera, the panoramic camera is provided with a first fisheye lens and a second fisheye lens, and the image stitching method comprises:
acquiring a first fisheye image based on the first fisheye lens, and acquiring a second fisheye image based on the second fisheye lens;
mapping the first fisheye image onto a unit spherical surface to obtain a first spherical image and mapping the second fisheye image onto the unit spherical surface to obtain a second spherical image, wherein the first spherical image is a spherical image corresponding to the first fisheye image, and the second spherical image is a spherical image corresponding to the second fisheye image;
rotating the first spherical image by a specified angle to obtain a rotated first spherical image, and rotating the second spherical image by the specified angle to obtain a rotated second spherical image;
unfolding the rotated first spherical image into a first Equirectangular Projection (ERP) image, and unfolding the rotated second spherical image into a second ERP image, wherein the first ERP image is an image obtained by unfolding the rotated first spherical image in an ERP manner, and the second ERP image is an image obtained by unfolding the rotated second spherical image in the ERP manner; and
stitching the first ERP image and the second ERP image to obtain a target image.

2. The image stitching method according to claim 1, wherein the first fisheye lens and the second fisheye lens are symmetrical with respect to a first plane, and the first fisheye lens and the second fisheye lens are respectively located on two sides of the first plane; before the rotating the first spherical image by the specified angle to obtain the rotated first spherical image and rotating the second spherical image by the specified angle to obtain the rotated second spherical image, the method further comprises:
establishing a spherical coordinate system, wherein the spherical coordinate system is a three-dimensional rectangular coordinate system, an origin of the spherical coordinate system is an intersection point of an optical center connecting line and the first plane; the optical center connecting line is a connecting line between an optical center of the first fisheye lens and an optical center of the second fisheye lens; a first axis of the spherical coordinate system is perpendicular to the first plane; a second axis of the spherical coordinate system is on the first plane and perpendicular to the first axis; a direction of the second axis is vertically upward; a third axis of the spherical coordinate system is perpendicular to a second plane; and the second plane is a plane where the first axis and the second axis are located;
the rotating the first spherical image by the specified angle to obtain the rotated first spherical image and rotating the second spherical image by the specified angle to obtain the rotated second spherical image comprises:
rotating the first spherical image around the third axis by 90 degrees in a specified direction to obtain a rotated first spherical image, and rotating the second spherical image around the third axis by 90 degrees in the specified direction to obtain a rotated second spherical image.

3. The image stitching method according to claim 2, wherein the rotating the first spherical image around the third axis by 90 degrees in the specified direction to obtain the rotated first spherical image and rotating the second spherical image around the third axis by 90 degrees to obtain the rotated second spherical image in the specified direction comprises:
rotating the first spherical image around the third axis counterclockwise by 90 degrees to obtain a rotated first spherical image, and rotating the second spherical image around the third axis counterclockwise by 90 degrees to obtain a rotated second spherical image.

4. The image stitching method according to claim 1, wherein the stitching the first ERP image and the second ERP image to obtain the target image comprises:
determining a target region in the first ERP image and a target region in the second ERP image, wherein the target region in the first ERP image is a region in the first ERP image having a plurality of identical feature points with the second ERP image, and the target region in the second ERP image is a region in the second ERP image having a plurality of identical feature points with the first ERP image;
determining a relative displacement between identical feature points based on the target region in the first ERP image and the target region in the second ERP image; and
stitching the first ERP image and the second ERP image based on the relative displacement to obtain a target image.

5. The image stitching method according to claim 4, wherein the stitching the first ERP image and the second ERP image based on the relative displacement to obtain the target image comprises:
performing orthogonal decomposition on the relative displacement in a two-dimensional latitude and longitude coordinate system to obtain a component of the relative displacement in a meridian extension direction;
registering the target region in the first ERP image and the target region in the second ERP image based on the component of the relative displacement in the meridian extension direction to obtain a registration result; and
stitching the first ERP image and the second ERP image according to the registration result to obtain the target image.

6. The image stitching method according to claim 2, wherein the target image is a two-dimensional planar image; after stitching the first ERP image and the second ERP image to obtain the target image, the method comprises:
converting the target image into a third spherical image;
rotating the third spherical image around the third axis by 90 degrees in a reverse direction to obtain a rotated third spherical image, wherein the reverse direction is opposite to the specified direction; and
unfolding the rotated third spherical image into a third ERP image, wherein the third ERP image is an image obtained by unfolding the rotated third spherical image in the ERP manner.

7. An image stitching apparatus, **characterized in that** the image stitching apparatus is applied to a panoramic camera, the panoramic camera is provided with a first fisheye lens and a second fisheye lens, and the image stitching apparatus comprises:
a first acquisition unit configured to acquire a first fisheye image based on the first fisheye lens, and acquire a second fisheye image based on the second fisheye lens;
a second acquisition unit configured to map the first fisheye image onto a unit spherical surface to obtain a first spherical image and map the second fisheye image onto the unit spherical surface to obtain a second spherical image, wherein the first spherical image is a spherical image corresponding to the first fisheye image, and the second spherical image is a spherical image corresponding to the second fisheye image;
a third acquisition unit configured to rotate the first spherical image by a specified angle to obtain a rotated first spherical image, and rotate the second spherical image by the specified angle to obtain a rotated second spherical image;
an unfolding unit configured to unfold the rotated first spherical image into a first ERP image, and unfold the rotated second spherical image into a second ERP image, wherein the first ERP image is an image obtained by unfolding the rotated first spherical image in an ERP manner, and the second ERP image is an image obtained by unfolding the rotated second spherical image in the ERP manner; and
a stitching unit configured to stitch the first ERP image and the second ERP image to obtain a target image.

8. The image stitching apparatus according to claim 7, wherein the first fisheye lens and the second fisheye lens are symmetrically provided with respect to a first plane, and the first fisheye lens and the second fisheye lens are respectively located on two sides of the first plane; the image stitching apparatus further comprises a coordinate system establishment unit, and the coordinate system establishment unit is configured to:
before the third acquisition unit rotates the first spherical image by a specified angle to obtain a rotated first spherical image and rotates the second spherical image by a specified angle to obtain a rotated second spherical image, establish a spherical coordinate system, wherein the spherical coordinate system is a three-dimensional rectangular coordinate system; an origin of the spherical coordinate system is an intersection point of an optical center connecting line and the first plane; the optical center connecting line is a connecting line between an optical center of the first fisheye lens and an optical center of the second fisheye lens; a first axis of the spherical coordinate system is perpendicular to the first plane; a second axis of the spherical coordinate system is on the first plane and perpendicular to the first axis; a direction of the second axis is vertically upward; a third axis of the spherical coordinate system is perpendicular to a second plane; and the second plane is a plane where the first axis and the second axis are located;
when performing the steps of rotating the first spherical image by a specified angle to obtain a rotated first spherical image and rotating the second spherical image by the specified angle to obtain a rotated second spherical image, the third acquisition unit is configured to:
rotate the first spherical image around the third axis by 90 degrees in a specified direction to obtain a rotated first spherical image, and rotate the second spherical image around the third axis by 90 degrees in the specified direction to obtain a rotated second spherical image.

9. A panoramic camera, **characterized by** comprising a first fisheye lens, a second fisheye lens, a memory, a processor, and a computer program stored in the memory and executable on the processor, and when the computer program is executed by the processor, the method according to any one of claims 1 to 6 is implemented.

10. A computer-readable storage medium, **characterized in that** the computer-readable storage medium stores a computer program, and when the computer program is executed by a processor, the method according to any one of claims 1 to 6 is implemented.
